# EUROPEAN PATENT SPECIFICATION

(11) **EP 4 165 100 B1**
(45) Date of publication and mention of the grant of the patent: **19.03.2025**
(21) Application number: 21734732.7
(22) Date of filing: 07.06.2021
(51) Int. Cl.: C08G 18/16, C08G 18/18, C08G 18/22, C08G 18/42, C08G 18/76, C08J 9/00, C08J 9/12, C08J 9/14, C08G 18/38, C08G 18/66, C08K 5/5419, C08L 75/04, C08G 101/00

(54) **ISOCYANATE-REACTIVE COMPOSITION AND METHOD OF PREPARING POLYURETHANE AND POLYISOCYANURATE FOAMS**
ISOCYANAT-REAKTIVE ZUSAMMENSETZUNG UND VERFAHREN ZUR HERSTELLUNG VON POLYURETHAN- UND POLYISOCYANURAT-SCHÄUMEN
COMPOSITION RÉACTIVE AUX ISOCYANATES ET PROCÉDÉ POUR LA PRÉPARATION DE MOUSSES DE POLYURÉTHANE ET DE POLYISOCYANURATE

(30) Priority: 11.06.2020 IT 202000013954; 17.07.2020 IT 202000017419
(43) Date of publication of application: 19.04.2023
(73) Proprietor: Dow Global Technologies LLC, Midland, MI 48674 (US)
(72) Inventor: ZHOU, Weijun, Lake Jackson, Texas 77566 (US); MOSCIATTI, Thomas, 42015 Correggio (IT)
(74) Representative: Beck Greener LLP
(86) International application number: PCT/US2021/036081
(87) International publication number: WO 2021/252308

(56) References cited:
- EP-A1- 0 533 202
- US-A- 5 852 065
- US-A1- 2019 153 259
- US-B1- 6 294 107

## Description

### FIELD

The present disclosure relates to the field of thermal insulation rigid foams. More particularly, the present disclosure relates to an isocyanate-reactive composition which comprise a liquid siloxane with T-shaped structure to produce rigid polyisocyanurate (PIR) and polyurethane (PUR) foams exhibiting superior thermal insulation. The invention is set out in the appended set of claims.

### INTRODUCTION

Rigid polyisocyanurate (PIR) and polyurethane (PUR) foams have outstanding thermal insulation performance and thus can be used in various applications such as building and construction, roofing, tanks, pipes, appliances, refrigerated transport, etc. The reason for these unique characteristics is the combination of a closed-cell cellular structure that comprise specific gas with low thermal conductivity, such as hydrocarbons. US 6, 294, 107 B1 discloses an alkylene oxide and isocyanate modified silicone glycol compatibilizing agent for polyester polyol compositions. With the market demand for better thermal insulation as well as government regulations requiring ever higher energy efficiency, there is a critical need and a continuous market demand to further improve thermal insulation performance of PIR/PUR rigid foam products. One such solution is to get foams with finer cellular structure to achieve a lower thermal conductivity, also known as λ value or K factor. There remains a need to achieve better thermal insulation while maintaining easy processing, light weight and good mechanical properties at the same time.

### SUMMARY

A purpose of the present disclosure is to provide an isocyanate-reactive composition and a foam-forming composition for producing rigid polyisocyanurate (PIR) and polyurethane (PUR) foams. The present disclosure is based on a surprising finding that a liquid siloxane with T-shaped structure can effectively decrease K factor of the resultant rigid PIR/PUR foams while retaining good mechanical properties.

The isocyanate-reactive component comprises at least one isocyanate-reactive compound; at least one liquid siloxane material of T-shaped structure and the isocyanate-reactive composition is visually clear with no phase separation, wherein at least one liquid siloxane material is a T-shaped tri-siloxane of the following structures:

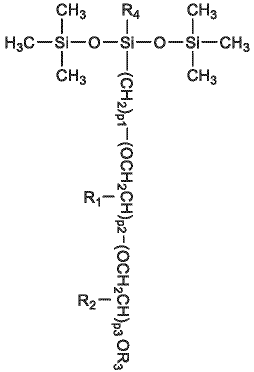

R₁ and R₂ are each independently a hydrogen or a C1-C4 alkyl group, p1 is an integer value of 1 - 6, p2 is an integer value of 1 - 12, p3 is an integer value of 0 - 12, the values of p1 and p2 combined being greater than or equal to 2 and less than or equal to 24; R₃ being a C1-C4 alkyl group, an acetyl, a propionyl, or butyrate or an ester/ether group; and R₄ being a C1-C4 alkyl group, or trimethylsiloxy group.

Another embodiment of this invention is a foam-forming composition and rigid polyurethane and polyisocyanurate foam prepared from such a foam-forming composition, comprising the isocyanate-reactive composition disclosed above, at least one isocyanate component, and optionally comprising auxiliary components such as surfactants, catalysts, blowing agents, etc. The isocyanate index of such a foam-forming composition preferably lies between 100 and 600.

The amount of liquid siloxane additive material with the T-shaped structure utilized in these embodiments and others may range from 0.1 pts to 5 pts (e.g., from 0.2 - 4 pts, from 0.5 pts to 3.5 pts, or 0.5 pts to 2.5 pts, or 0.5 pts to 2 pts) based on the total weight of the at least one isocyanate-reactive compound to be equal to 100 pts.

Any of the optional auxiliary components such as blowing catalyst, gel catalyst, trimerization catalyst, surfactant, reactive or non-reactive diluent, physical or chemical blowing agent, antioxidant, flame retardant additives, pigments, etc. may be first incorporated either into the isocyanate-reactive composition or into the isocyanate component before mixing the isocyanate-reactive composition and the isocyanate component together for foam production, or admixed into the foam-forming composition as a separate stream during the mixing of the isocyanate-reactive composition and the isocyanate component. Not all of these optional auxiliary components are required for the foam production and should not be read as limiting the scope of this disclosure in any way.

It should be noted that throughout this disclosure the T-shaped siloxane additive material is sometimes referred to as an additive and sometimes a material. This is because the siloxane may be present as an additive when compared to the archetypal reaction between a polyol (e.g., isocyanate reactive compound) and isocyanate. The siloxane may also be incorporated with the polyol prior to mixing with the isocyanate and other additives such as a blowing agent, etc. making it part of the isocyanate reactive component and not an additive added in the same manner as a blowing agent, etc. would normally be added.

It is to be understood that both the foregoing general description and the following detailed description are exemplary and explanatory only and are not restrictive of the claims.

### DETAILED DESCRIPTION

Unless defined otherwise, all technical and scientific terms used herein have the same meaning as commonly understood by one of ordinary skill in the art to which the method belongs. As disclosed herein, the term "composition", "formulation" or "mixture" refers to a physical blend of different components, which is obtained by mixing simply different components by a physical means. As disclosed herein, "and/or" means "and, or as an alternative". All ranges include endpoints unless otherwise indicated.

In various embodiments, a composition for producing rigid polyisocyanurate (PIR) and polyurethane (PUR) foams is provided, comprising an isocyanate component having two or more isocyanate groups in each molecule, an isocyanate-reactive component such as a polyol that can react with the isocyanate group, and a liquid siloxane with T-shaped structure that is miscible in the isocyanate-reactive component. The isocyanate component and the isocyanate-reactive component are generally stored in separate containers until the moment when they are ready to be mixed together and subjected to the polymerization reaction between the isocyanate groups and hydroxyl groups to form polyisocyanurate and/or polyurethane. Polyurethane refers to a polymer comprising a main chain formed by the repeating unit (-NH-C(O)-O-) derived from the reaction between isocyanate group and hydroxyl group, while polyisocyanurate comprises an isocyanurate ring structure formed by trimerization of isocyanate groups. PUR and PIR foams may also contain the urea group due to the use of water as a chemical blowing agent and/or the incorporation of an amine compound in a foam formulation.

As used herein, the terms of "polyisocyanurate and polyurethane", "polyisocyanurate or polyurethane", "PIR and PUR", "PIR or PUR" and "PIRIPUR" are used interchangeably in this disclosure and refer to a polymeric system comprising both polyurethane chain and the groups which result in cyclo-trimerization of isocyanate (sometimes called "polyisocyanurate groups"), with the relative proportions thereof mainly depend on the stoichiometric ratio of the isocyanate compounds and polyol compounds contained in the raw materials. Besides, the ingredients, such as catalysts and other additives, and processing conditions, such as temperature, reaction duration, etc., may also influence the relative amounts of the PUR and PIR in the final foam product. Therefore, polyisocyanurate and polyurethane foam (PIR/PUR foam) as stated in the context of the present disclosure refer to foams obtained as a product of the reaction between the above indicated isocyanates and compounds having isocyanate-reactive groups, particularly, polyols. Besides, additional functional groups, e.g. allophanates, biurets or ureas may be formed during the foaming reaction. The PIR/PUR foam may be a rigid foam. The composition of the present disclosure may further comprise catalyst, blowing agent, and other additives.

According to an embodiment of the present disclosure, the composition of the present disclosure may be prepared and stored as two separate "packages", i.e. an isocyanate package comprising the isocyanate component and a polyol package comprising an isocyanate-reactive composition comprising at least one isocyanate-reactive compound and a liquid siloxane with T-shaped structure, and optionally other auxiliary components such as surfactant, catalyst, blowing agent, etc. For example, the isocyanate-reactive component, surfactant, catalyst, blowing agent and other additives may be mixed together to obtain a "polyol package", which is then mixed with the isocyanate component to produce the PUR/PIR foam. According to various embodiments of the present disclosure, the amounts, contents or concentration of the isocyanate-reactive component and the isocyanate component in these embodiments are calculated based on the total weight of the foam-forming composition, i.e., the combined weight of the "polyol package" and the "isocyanate package", while the contents of the other components, e.g., the T-shaped siloxane, surfactant, catalyst, blowing agent and other additives, are based on the weight of the total polyols in the "polyol package" to be equal to 100 parts (pts).

In alternative embodiments, the T-shaped siloxane, surfactant, catalyst, blowing agent and other additives are not pre-mixed with the isocyanate-reactive compound and are added as independent streams, but the contents thereof are still calculated based on the weight of the total polyols in the "polyol package" to be equal to 100 pts. Any of these optional auxiliary components may be pre-mixed with the isocyanate compound for the foam production as long as they are miscible and chemically compatible with the isocyanate compound. In some embodiments, a gaseous blowing agent may be added into the isocyanate component to make it frothy, which minimizes the leak of the reactive foaming mixture during application.

### Isocyanate Component

In various embodiments, the isocyanate component of the present invention, can include, for example, one or more isocyanate compounds including for example a polyisocyanate. As used herein, "polyisocyanate" refers to a molecule having an average of greater than 1.0 isocyanate groups/molecule, e.g. an average functionality of greater than 1.0.

The isocyanate compound useful in the present invention may be an aliphatic polyisocyanate, a cycloaliphatic polyisocyanate, an araliphatic polyisocyanate, an aromatic polyisocyanate, or combinations thereof. Examples of isocyanates useful in the present invention include, but are not limited to, polymethylene polyphenylisocyanate; toluene 2,4-/2,6-diisocyanate (TDI); methylenediphenyl diisocyanate (MDI); polymeric MDI; triisocyanatononane (TIN); naphthyl diisocyanate (NDI); 4,4'-diisocyanatodicyclohexyl-methane; 3-isocyanatomethyl-3,3,5-trimethylcyclohexyl isocyanate (isophorone diisocyanate IPDI); tetramethylene diisocyanate; hexamethylene diisocyanate (HDI); 2-methyl-pentamethylene diisocyanate; 2,2,4-trimethylhexamethylene diisocyanate (THDI); dodecamethylene diisocyanate; 1,4-diisocyanatocyclohexane; 4,4'-diisocyanato-3,3'-dimethyl-dicyclohexylmethane; 4,4'-diisocyanato-2,2-dicyclohexylpropane; 3-isocyanatomethyl-1-methyl-1-isocyanatocyclohexane (MCI); 1,3 -diisooctylcyanato-4 -methylcyclohexane; 1,3 -diisocyanato -2-methylcyclohexane; and combinations thereof, among others. In addition to the isocyanates mentioned above, partially modified polyisocyanates including uretdione, isocyanurate, carbodiimide, 4retoneimine, allophanate or biuret structure, and combinations thereof, among others, may be utilized in the present invention.

The isocyanate compound may be polymeric. As used herein "polymeric", in describing the isocyanate, refers to high molecular weight homologues and/or isomers. For instance, polymeric methylene diphenyl isocyanate refers to a high molecular weight homologue and/or an isomer of methylene diphenyl isocyanate.

The isocyanate compound useful in the present invention may be modified multifunctional isocyanates, that is, products which are obtained through chemical reactions of an isocyanate compound. Exemplary are polyisocyanates containing esters, ureas, biurets, allophanates and carbodiimides and/or uretoneimines. Liquid polyisocyanates containing carbodiimide groups, uretoneimines groups and/or isocyanurate rings, having isocyanate groups (NCO) contents of from 10 to 35 weight percent, from 10 to 32 weight percent, from 10 to 30 weight percent, from 15 to 30 weight percent, or from 15 to 28 weight percent can also be used. These include, for example, polyisocyanates based on 4,4'- 2,4'- and/or 2,2'-diphenylmethane diisocyanate and the corresponding isomeric mixtures, 2,4- and/or 2,6-toluenediisocyanate and the corresponding isomeric mixtures; mixtures of diphenylmethane diisocyanates and PMDI; and mixtures of toluene diisocyanates and PMDI and/or diphenylmethane diisocyanates.

Alternatively, or additionally, the isocyanate component may also comprise an isocyanate prepolymer. The isocyanate prepolymer is known in the art; and in general, is prepared by reacting (1) at least one isocyanate compound and (2) at least one polyol compound. The isocyanate prepolymer can be obtained by reacting the above stated monomeric isocyanate compounds or polymeric isocyanate with one or more isocyanate reactive compounds such as ethylene glycol, 1,2-propanediol, 1,3-propanediol, 1,3-butanediol, 1,4-butenediol, 1,4-butynediol, 1,5-pentanediol, neopentylglycol, bis(hydroxy-methyl) cyclohexanes such as 1,4bis(hydroxymethyl)cyclohexane, 2-methylpropane-1,3-diol, methylpentanediols, diethylene glycol, triethylene glycol, tetraethylene glycol, polyethylene glycol, dipropylene glycol, polypropylene glycol, dibutylene glycol and polybutylene glycols.

Suitable prepolymers for use as the polyisocyanate component are prepolymers having NCO group contents of from 5 to 30 weight percent or preferably from 10 to 30 weight percent. These prepolymers may be prepared by reaction of the di- and/or poly-isocyanates with materials including lower molecular weight diols and triols. Individual examples are aromatic polyisocyanates containing urethane groups, having NCO contents of from 5 to 30 weight percent (e.g., 10 to 30 or 15 to 30 weight percent) obtained by reaction of diisocyanates and/or polyisocyanates with, for example, lower molecular weight diols, triols, oxyalkylene glycols, dioxyalkylene glycols, or polyoxyalkylene glycols having molecular weights up to about 1000. These polyols can be employed individually or in mixtures as di- and/or polyoxyalkylene glycols. For example, diethylene glycols, dipropylene glycols, polyoxyethylene glycols, ethylene glycols, propylene glycols, butylene glycols, polyoxypropylene glycols and polyoxypropylene-polyoxyethylene glycols can be used. Polyester polyols can also be used, as well as alkane diols such as butane diol. Other diols also useful include bishydroxyethyl- or bishydroxypropyl-bisphenol A, cyclohexane dimethanol, and bishydroxyethyl hydroquinone.

As aforementioned, the isocyanate may have an average functionality of greater than 1.0 isocyanate groups/molecule. For instance, the isocyanate may have an average functionality of from 1.75 to 3.50. All individual values and subranges from 1.75 to 3.50 are included; for example, the isocyanate may have an average functionality from a lower limit of 1.5, 1.75, 1.85, or 1.95 to an upper limit of 3.5, 3.4, 3.3, 3.2, 3.1 or 3.

The isocyanate may have an isocyanate equivalent weight of from 80 g/eq to 300 g/eq. All individual values and subranges from 80 g/eq to 300 g/eq are included; for example, the isocyanate may have an isocyanate equivalent weight from a lower limit of 80 g/eq, 90 g/eq, or 100 g/eq to an upper limit of 300 g/eq, 290 g/eq, or 280 g/eq.

The isocyanate used in the present invention may be prepared by a known process. For instance, a polyisocyanate may be prepared by phosgenation of corresponding polyamines with formation of polycarbamoylchlorides and thermolysis thereof to provide the polyisocyanate and hydrogen chloride; or in another embodiment, the polyisocyanate may be prepared by a phosgene-free process, such as by reacting the corresponding polyamines with urea and alcohol to give polycarbamates, and thermolysis thereof to give the polyisocyanate and alcohol, for example.

The isocyanate used in the present invention may be obtained commercially. Examples of commercial isocyanates useful in the present invention include, but are not limited to, polyisocyanates under the trade names VORANATE^{™}, PAPI^{™}, and ISONATE^{™}, such as VORANATE^{™} M 220, and PAPI^{™} 27, all of which are available from Dow, Inc., among other commercial isocyanates.

Generally, the amount of the isocyanate component may vary based on the end use of the rigid PIR/PUR foam. For example, as one illustrative embodiment, the concentration of the isocyanate component can be from about 20 wt% to about 80 wt%, or from about 25 wt% to about 80 wt%; or from about 30 wt% to about 75 wt%, based on the total weight of all the components in the reactive foam-forming composition for preparing the rigid PIR/PUR foam.

The stoichiometric ratio of the isocyanate groups in the isocyanate component to the hydroxyl groups in the isocyanate-reactive component is between about 1.0 and 6. This ratio multiplied by 100 is typically referred as isocyanate index. The isocyanate index may have a lower limit from 100, 105, 110, 115, 120, 125, 150, 175, and 180 to an upper limit of 600, 575, 550, 525, 500, 475, 450, 425, 400, 375, 350, 325, and 300.

### Isocyanate-Reactive Component

In various embodiments of the present disclosure, the isocyanate-reactive composition comprises one or more isocyanate-reactive compounds such as polyols selected from the group consisting of aliphatic polyhydric alcohols comprising at least two hydroxyl groups, cycloaliphatic or aromatic polyhydric alcohols comprising at least two hydroxyl groups, arylalkyl groups, araliphatic polyhydric alcohols comprising at least two hydroxy groups, polyether polyol, polycarbonate polyol, polyester polyol, polyesterether polyol and mixture thereof. In one example, the polyol is selected from the group consisting of C2-C16 aliphatic polyhydric alcohols comprising at least two hydroxy groups, C6-C15 cycloaliphatic or aromatic polyhydric alcohols comprising at least two hydroxy groups, C7-C15 araliphatic polyhydric alcohols comprising at least two hydroxy groups. Polyester polyols generally have an average molecular weight from 200 to 5,000. Polyether polyols have an average molecular weight from 50 to 5,000, and combinations thereof.

In an embodiment, the isocyanate-reactive component comprises a mixture of two or more different polyols, such as a mixture of two or more polyether polyols, a mixture of two or more polyester polyols, or a mixture of at least one polyether polyols with at least one polyester polyols. The isocyanate-reactive component has a functionality (average number of isocyanate-reactive groups, particularly, hydroxyl group, in a polyol molecule) of at least 1.8 and a OH number of 80 to 2,000 mg KOH/g. For example, from 100 to 1,500 mg KOH/g, from 120 to 1,000 mg KOH/g, from 150 to 1,000 mg KOH/g, from 150 to 750 mg KOH/g, from 175 to 750 mg KOH/g, from 175 - 500 mg KOH/g, or from 200 to 500 mg KOH/g.

In general, the average hydroxyl functionality of the polyol compound useful in the present invention, such as those described above, can range from a low as 1.8 to as high as 7.5. For example, the aromatic polyester polyol may have an average hydroxyl functionality from 1.8 to 3.0; and the sucrose/glycerine-initiated polyether polyol may have an average hydroxyl functionality of from 3.0 to 7.5. Therefore, the average hydroxyl functionality of the polyol compound used in the present invention can range from 1.8 to 7.5. All individual values and subranges from 1.8 to 7.5 are included; for example, the polyol compound may have an average hydroxyl functionality from a lower limit of 1.8, 2.0, 2.2, 2.5, 2,7, 3.0, or 3.5 to an upper limit of 7.5, 7.0, 6.5, 6.0, 5.7, 5.5, 5.2, 5.0, 4.8, 4.5, 4.2, or 4.0.

In general, the polyol compound may have an average hydroxyl number ranging from 75 mg KOH/g to 650 mg KOH/g. All individual values and subranges from 75 mg KOH/g to 650 mg KOH/g are included; for example, the polyol compound may have an average hydroxyl number from a lower limit of 75 mg KOH/g, 80 mg KOH/g, 100 mg KOH/g, 125 mg KOH/g, 150 mg KOH/g, or 175 mg KOH/g to an upper limit of 650 mg KOH/g, 600 mg KOH/g, 550 mg KOH/g, 500 mg KOH/g, 450 mg KOH/g, or 400 mg KOH/g.

In general, the polyol compound may have a number average molecular weight of from 100 g/mol to 1,500 g/mol. All individual values and subranges of from 100 g/mol to 1,500 g/mol are included; for example, the polyol compound may have a number average molecular weight from a lower limit of 100 g/mol, 150 g/mol, 175 g/mol, or 200 g/mol to an upper limit of 1,500 g/mol, 1250 g/mol, 1,000 g/mol, or 900 g/mol.

In general, the polyol compound may have a hydroxyl equivalent molecular weight from 50 g/eq to 750 g/eq. All individual values and subranges from 50 g/eq to 750 g/eq are included; for example, the polyol compound may have a hydroxyl equivalent molecular weight from a lower limit of 50 g/eq, 90 g/eq, 100 g/eq, or 110 g/eq to an upper limit of 350 g/eq, 300 g/eq, 275 g/eq, or 250 g/eq.

The polyester polyol is typically obtained by condensation of polyhydric alcohols with polyfunctional carboxylic acids having from 2 to 12 carbon atoms (e.g., 2 to 6 carbon atoms). Typical polyhydric alcohols for preparing the polyester polyol are diols or triols and include ethylene glycol, diethylene glycol, polyethylene glycol such as PEG 200, propylene glycol, dipropylene glycol, polypropylene glycol, butylene glycol, pentylene glycol or hexylene glycol, polyether polyol, glycerol, etc. Typical polyfunctional carboxylic acids are selected from the group consisting of succinic acid, glutaric acid, adipic acid, suberic acid, azelaic acid, sebacic acid, decanedicarboxylic acid, maleic acid, fumaric acid and phthalic acid, isophthalic acid, terephthalic acid, the isomeric naphthalenedicarboxylic acids, and combinations thereof. The average OH functionality of a polyester polyol is preferably at least 1.8, even more preferably at least 2.0. Aromatic polyester polyols are one common type of polyester polyols used in rigid polyurethane foam.

As used herein "aromatic polyester polyol" refers to a polyester polyol including an aromatic ring. As an example, the aromatic polyester polyol may be phthalic anhydride diethylene glycol polyester or may be prepared from the use of aromatic dicarboxylic acid with glycols. The aromatic polyester polyol may be a hybrid polyester-polyether polyol, e.g., as discussed in International Publication No. WO 2013/053555.

In one embodiment, the aromatic polyester polyol may be prepared using known equipment and reaction conditions. In another embodiment, the aromatic polyester polyol may be obtained commercially. Examples of commercially available aromatic polyester polyols include, but are not limited to, a number of polyols sold under the trade name STEPANPOL^{™}, such as STEPANPOL^{™} PS-2352, available from Stepan Company, among others.

The polyether polyols usually have a hydroxyl functionality between 2 and 8, in particular from 2 to 6 and is generally prepared by polymerization of one or more alkylene oxides selected from propylene oxide (PO), ethylene oxide (EO), butylene oxide, tetrahydrofuran and mixtures thereof, with a proper starter molecule or a mixture of multiple starter molecules in the presence of catalyst. Typical starter molecules include compounds having at least two hydroxyl groups or have at least one primary amine group in the molecule. Suitable starter molecules can be ethylene glycol, glycerol, trimethylolprpane, pentaerythritol, castor oil, sugar compounds such as, glucose, sorbitol, mannitol and sucrose, aliphatic amines, and aromatic amines, polyhydric phenols, resols, such as oligomeric condensation products of phenol and formaldehyde and Mannich condensates of phenols, formaldehyde and dialkanolamines, and also melamine, etc.

By way of starter molecules having at least 2 (e.g., from 2 to 8) hydroxyl groups in the molecule, it is possible to further use the following non-limiting examples: trimethylolpropane, glycerol, pentaerythritol, castor oil, sugar compounds such as, glucose, sorbitol, mannitol and sucrose, polyhydric phenols, resols, such as oligomeric condensation products of phenol and formaldehyde and Mannich condensates of phenols, formaldehyde and dialkanolamines, and also melamine. Catalyst for the preparation of polyether polyols may include alkaline catalysts, such as potassium hydroxide, for anionic polymerization or Lewis acid catalysts, such as boron trifluoride, for cationic polymerization. Suitable polymerization catalysts may include potassium hydroxide, cesium hydroxide, boron trifluoride, or a double cyanide complex (DMC) catalyst such as zinc hexacyanocobaltate or quaternary phosphazenium compound. In an embodiment of the present disclosure, the polyether polyol has a number average molecular weight in the range from 100 to 2,000 g/mol. For example, in the range from 125 to 1,500 g/mol, from 150 to 1,250 g/mol from 150 to 1,000 g/mol or from 200 to 1,000 g/mol.

A polyether polyol suitable for use in this invention may have an average hydroxyl functionality of 2.0, commonly referred as a diol. The diol may be ethylene glycol, propylene glycol, an ethoxylate of ethylene glycol or propylene glycol, a propyloxylate of ethylene glycol or propylene glycol, etc. Examples of commercially available diols include, but are not limited to, a number of polyols sold under the trade name VORANOL^{™}, such as VORANOL^{™} 2110-TB, available from The Dow Chemical Company, among others.

A polyether polyol suitable for use in this invention may have an average hydroxyl functionality of 3.0, commonly referred as a triol. The triol may be a glycerol, a trimethylolpropane, an ethoxylate or propyloxylate of glycerol or trimethylolprpane, etc. The triol may be prepared using known equipment and reaction conditions. Examples of commercially available triols include, but are not limited to, a number of polyols sold under the trade name VORATEC^{™}, such as VORATEC^{™} SD 301, available from The Dow Chemical Company, among others.

A polyether polyol suitable for use in this invention may include a sucrose/glycerine-initiated polyether polyol. The sucrose/glycerine-initiated polyether polyol may include structural units derived from another alkylene oxide, e.g., ethylene oxide or propylene oxide. The sucrose/glycerine-initiated polyether polyol may include structural units derived from styrene-acrylonitrile, polyisocyanate, and/or polyurea. The sucrose/glycerine-initiated polyether polyol may be prepared using known equipment and reaction conditions. For instance, the sucrose/glycerine-initiated polyether polyol may be formed from reaction mixtures including sucrose, propylene oxide, and glycerin. One or more embodiments provide that the sucrose/glycerine-initiated polyether polyol is formed via a reaction of sucrose and propylene oxide. In another embodiment, the sucrose/glycerine-initiated polyether polyol may be obtained commercially. Examples of commercially available sucrose/glycerine-initiated polyether polyols include, but are not limited to, a number of polyols sold under the trade name VORANOL^{™}, such as VORANOL^{™} 360, VORANOL^{™} 490, and VORANOL^{™} 280 available from The Dow Chemical Company (Dow, Inc.), among others.

A polyether polyol suitable for use in this invention may include a sorbitol-initiated polyether polyol. The sorbitol-initiated polyether polyol may be prepared using known equipment and reaction conditions. For instance, the sorbitol-initiated polyether polyol may be formed from reaction mixtures including sorbitol and alkylene oxides, e.g., ethylene oxide, propylene oxide, and/or butylene oxide. The sorbitol-initiated polyether polyol may be capped, e.g., the addition of the alkylene oxide may be staged to preferentially locate or cap a particular alkylene oxide in a desired position of the polyol. Sorbitol-initiated polyether polyols may be obtained commercially. Examples of commercially available sorbitol-initiated polyether polyols include, but are not limited to, a number of polyols sold under the trade name VORANOL^{™}, such as VORANOL^{™} RN 482, available from The Dow Chemical Company, among others.

A polyether polyol suitable for use in this invention may include polyol compounds that include an amine-initiated polyol. The amine-initiated polyol may be initiated from aromatic amine or aliphatic amine, for example, the amine-initiated polyol may be an ortho toluene diamine (o-TDA) initiated polyol, an ethylenediamine initiated polyol, a diethylenetriamine, triisopropanolamine initiated polyol, or a combination thereof, among others. Amine-initiated polyols may be prepared using known equipment and reaction conditions. For instance, the amine-initiated polyol may be formed from reaction mixtures including aromatic amines or aliphatic amines and alkylene oxides, e.g., ethylene oxide and/or butylene oxide, among others. The alkylene oxides may be added into an alkoxylation reactor in one step or via several steps in sequence, wherein in each step, a single alkylene oxide or a mixture of alkylene oxides may be used.

In general, the amount of polyols used herein may range from about 10 wt% to about 80 wt%, or from about 12 wt% to 70 wt%, or from about 15 wt% to 60 wt% or from about 15 wt% to about 55 wt%, or from about 15 wt% to about 50 wt%, based on the total weight of all components in the foam-forming composition for preparing the PUR/PIR foam.

### Siloxane of T-shaped Structure

Siloxanes are functional materials in silicone chemistry which feature a Si-O-Si linkage. A typical linear and unbranched siloxane can be represented by the following structure A, in which a main chain consisted of the repeating unit of -(Si(CH₃)₂-O)- is terminated with a tri(methyl)siloxy group on each end and p is an integer of e.g. 1 to 100, hence an unbranched siloxane molecule only comprises two tri(methyl)siloxy groups.

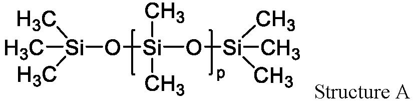

A branched siloxane has more than two tri(methyl)siloxy groups. An example of a branched siloxane is shown below by the following formula, which contains four tri(methyl)siloxy groups:

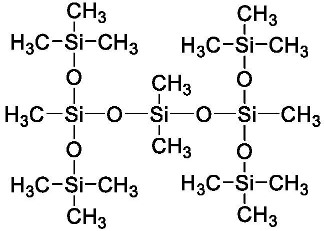

Siloxane materials are hydrophobic in nature. Unless additional chemical modification is made on siloxane molecules, they are not soluble in most of the common polyols used for producing polyisocyanurate/polyurethane foams.

It was surprisingly found that one type of siloxane with T-shaped structure is soluble in an isocyanate-reactive compound such as a polyol and can achieve an unexpected improvement in thermal insulation performance when a T-shaped siloxane is incorporated in a foam-forming composition at a small amount for making a rigid polyurethane and/or polyisocyanurate foam. The siloxane additive is a T-shaped tri-siloxane alkoxylate of the following structure:

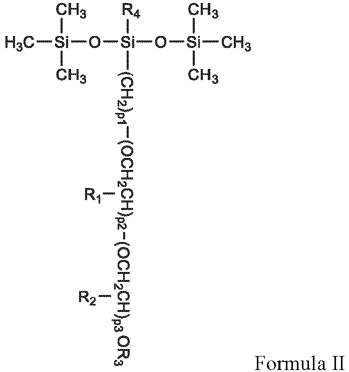

Wherein, R₁ and R₂ can be same or different and is equal to H, C1 to C4 alkyl group, p1 = 1 - 6, preferably from 3-6, p2 = 1 - 12, p3 = 0 - 12, and 2≤p2+p3≤24, preferably 3≤p2+p3≤20, more preferably 3≤p2+p3≤15, still more preferably 3≤p2+p3≤12, even more preferably 5≤p2+p3≤12; R₃ is a C1-C4 alkyl group, acetyl, propionyl, and butyrate, and R₄ can be C1 to C4 alkyl or a trimethylsiloxy group.

Advantageously used siloxane with T-shaped structure of this invention has molecular weight from 350 g/mol to 2,500 g/mol, All individual values and subranges of from 350 g/mol to 2,500 g/mol are included; for example, the T-shaped siloxane material may have a number average molecular weight from a lower limit of 350 g/mol, 400 g/mol, 425 g/mol, or 450 g/mol to an upper limit of 2,000 g/mol, 1,750 g/mol, 1,500 g/mol, 1,250 g/mol, 1,000 g/mol, 900 or 750 g/mol.

Siloxanes with the T-shaped structure shown in Formula (II) may be prepared using known equipment and reaction conditions. Methods of preparation can be found from patent literatures in, among others, U.S. Pat. Nos. 7,507,775; 7,645,720; and 7,935,842. Examples of commercially available siloxanes with T-shaped structures include OFX-5211 from Dow Inc., among others.

According to one embodiment of the present disclosure, the siloxane material with the T-shaped structure may be added as a separate stream or directly premixed in an isocyanate-reactive composition. In one embodiment of the present disclosure, at least one siloxane with the T-shaped structure is directly incorporated into at least one isocyanate-reactive compound to form an isocyanate reactive composition. The amount of at least one siloxane with the T-shaped structure is from 0.1 pts to 5 pts (e.g., from 0.2 pts to 4 pts, or 0.5 pts to 3.5 pts, or 0.5 pts to 2.5 pts) based on the total weight of at least one isocyanate-reactive compound to be equal to 100 pts.

### Optionally Auxiliary Components

In addition to the above at least one isocyanate-reactive component and at least one isocyanate component present in the foam-forming composition for the production of polyurethane/polyisocyanurate foam, the foam-forming composition of the present invention may also include other additional optional auxiliary components, compounds, agents or additives, as component (C); and such optional component (C) may be added to the reactive mixture with any of components A and/or B or as a separate addition as component (C). Component A refers to the at least one isocyanate component, and Component B refers to the at least one isocyanate-reactive component. The optional auxiliary components, compounds, agents or additives that can be used in the present invention can include one or more optional compounds known in the art for their use or function. For example, the optional component (C) can include expandable graphite, physical or chemical blowing agent, foaming catalyst, flame retardant, emulsifier, antioxidant, surfactant, liquid nucleating agents, solid nucleating agents, Ostwald ripening inhibitors additives, pigment, solvents including further a solvent selected from the group consisting of ethyl acetate, methyl ether ketone, toluene, and mixtures of two or more thereof; and mixtures of two or more of the above optional additives.

The amount of optional compound used to add to the foam-forming composition of the present invention can be, for example, from 0 pts to 50 pts, based on 100 pts of total polyols amount in the isocyanate-reactive composition in one embodiment, from 0.1 to 40 pts in another embodiment and from 1 pts to 35 pts in still another embodiment. For example, in one embodiment, the usage amount of a physical blowing agent, when used, can be from 1 pts to 40 pts, based on 100 pts of total polyols amount in the isocyanate-reactive component. In another embodiment, the usage amount of a chemical blowing agent, when used, can be from 0.1 pts to 10 pts, based on 100 pts of total polyols amount in the isocyanate-reactive component. In still another embodiment, the usage amount of a flame-retardant additive, when used, can be from 1 pts to 25 pts, based on 100 pts of total polyols amount in the isocyanate-reactive component. In yet another embodiment, the usage amount of a surfactant, when used, is typically from 0.1 pts to 10 pts, based on 100 pts of total polyols amount in the isocyanate-reactive component. In even still another embodiment, the usage amount of a foaming catalyst, when used, is from 0.05 pts to 5 pts, based on 100 pts of total polyols amount in the isocyanate-reactive component. And, in a general embodiment, the usage amount of other additives, when used, can be from 0.1 pts to 5 pts, based on 100 pts of total polyols amount in the isocyanate-reactive component.

### Blowing Agent

In various embodiments, a blowing agent may be selected based at least in part on the desired density of the final foam. The blowing agent may be added to the polyol side before the isocyanate-reactive component is combined with the isocyanate component or added as a separate stream. Without being bound by theory, the blowing agent may absorb heat from the exothermic reaction of the combination of the isocyanate component with the isocyanate-reactive component and vaporize and provide additional gas useful in expanding the polyurethane foam to a desirable low density.

A variety of conventional blowing agents can be used. For example, the blowing agent can be one or more of water, various hydrocarbons, various hydrofluorocarbons, various hydrofluoroolefins, formic acid, noble gases, a variety of chemical blowing agents that produce nitrogen or carbon dioxide under the conditions of the foaming reaction, and the like; and mixtures thereof.

The chemical blowing agent such as water can be used alone or mixed with other chemical and/or physical blowing agents. Physical blowing agents can be used such as low-boiling hydrocarbons. Examples of such used liquids are alkanes, such as heptane, hexane, n- and iso-pentane, technical grade mixtures of n- and isopentanes and n- and iso-butane and propane, cycloalkanes such as cyclopentane and/or cyclohexane, ethers, such as furan, dimethyl ether and diethyl ether, ketones such as acetone and methyl ethyl ketone, alkyl carboxylates, such as methyl formate, dimethyl oxalate and ethylene lactate and halogenated hydrocarbons such as methylene chloride, dichloromonofluoromethane, difluoromethane, trifluoromethane, difluoroethane, tetrafluoroethane, chlorodifluoroethanes, 1, 1-dichloro-2,2,2-trifluoroethane, 2,2-dichloro-2-fluoroethane, pentafluoropropane, heptafluoropropane and hexafluorobutene, (E,Z) 1,1,1,4,4,4-hexafluoro-2-butene and trans-1 chloro-,3,3,3-trifluoropropene, trans-1,3,3,3-tetrafluoroprop-1-ene, 1,3,3,3-tetrafluoropropene, etc. Some of these blowing agents are commercially available materials known as Solstice-̅ LBA, Solstice-̅ GBA, Opteon^{™} 1100, Opteon^{™} 1150, etc.

Mixtures of these low boiling liquids with each other and/or with other substituted or unsubstituted hydrocarbons can also be used. Also suitable are organic carboxylic acids such as formic acid, acetic acid, oxalic acid, and carboxyl-containing compounds.

In various embodiments, the amount of blowing agent is from about 0. 1 pts to about 40 pts (e.g., from about 0.5 pts to about 35 pts, from 1 pts to 30 pts, or from 5 pts to 25 pts) based on 100 pts of total polyols amount in the isocyanate-reactive composition.

### Catalyst

Catalyst may include urethane reaction catalyst and isocyanate trimerization reaction catalyst. Trimerization catalysts may be any trimerization catalyst known in the art that will catalyze the trimerization of an organic isocyanate compound. Trimerization of isocyanates may yield polyisocyanurate compounds inside the polyurethane foam. Without being limited to theory, the polyisocyanurate compounds may make the polyurethane foam more rigid and provide improved reaction to fire. Trimerization catalysts can include, for example, glycine salts, tertiary amine trimerization catalysts, alkali metal carboxylic acid salts, and mixtures thereof. In some embodiments, sodium N-2-hydroxy-5-nonylphenyl-methyl-N- methylglycinate may be employed. When used, the trimerization catalyst may be present in an amount of 0.05 -5 pts, (e.g., 0.1- 3.5 pts, or 0.2 - 2.5 pts, or 0.5 - 2.5 pts) based on 100 pts of total polyols amount in the isocyanate-reactive component.

Tertiary amine catalysts include organic compounds that contain at least one tertiary nitrogen atom and are capable of catalyzing the hydroxyl/isocyanate reaction between the isocyanate component and the isocyanate-reactive component. Tertiary amine catalysts can include, by way of example and not limitation, triethylenediamine, tetramethylethylenediamine, pentamethyldiethylene triamine, bis(2-dimethylaminoethyl)ether, triethylamine, tripropylamine, tributylamine, triamylamine, pyridine, quinoline, dimethylpiperazine, piperazine, N-ethylmorpholine, 2-methylpropanediamine, methyltriethylenediamine, 2,4,6-tridimethylamino-methyl)phenol, N, N', N"-tris(dimethyl amino-propyl)sym-hexahydrotriazine, and mixtures thereof. When used, the tertiary amine catalyst may be present in an amount of 0.05 - 5 pts (e.g., 0.1- 3.5 pts, or 0.2 - 2.5 pts, or 0.5 - 2.5 pts) of the "polyol package" based on 100 pts of total polyols amount in the isocyanate-reactive component.

The composition of the present disclosure may further comprise the following catalysts: tertiary phosphines, such as trialkylphosphines and dialkylbenzylphosphines; chelates of various metals, such as those which can be obtained from acetylacetone, benzoylacetone, trifluoroacetyl acetone, ethyl acetoacetate and the like with metals such as Be, Mg, Zn, Cd, Pd, Ti, Zr, Sn, As, Bi, Cr, Mo, Mn, Fe, Co and Ni; acidic metal salts of strong acids such as ferric chloride, stannic chloride; salts of organic acids with variety of metals, such as alkali metals, alkaline earth metals, Al, Sn, Pb, Mn, Co, Ni and Cu; organotin compounds, such as tin(II) salts of organic carboxylic acids, e.g., tin(II) diacetate, tin(II) dioctanoate, tin(II) diethylhexanoate, and tin(II) dilaurate, and dialkyltin(IV) salts of organic carboxylic acids, e.g., dibutyltin diacetate, dibutyltin dilaurate, dibutyltin maleate and dioctyltin diacetate; bismuth salts of organic carboxylic acids, e.g., bismuth octanoate; organometallic derivatives of trivalent and pentavalent As, Sb and Bi and metal carbonyls of iron and cobalt. The total amount of the catalyst component used herein may range generally from about 0.01 pts to about 10 pts in one embodiment, and from 0.05 pts to about 5 pts in another embodiment, based on 100 pts of total polyols amount in the isocyanate-reactive component.

### Surfactant

The isocyanate-reactive composition of the present invention may include a surfactant, e.g., the surfactant may be added to the isocyanate-reactive composition. The surfactant may be a cell-stabilizing surfactant. Examples of surfactants useful in the present invention include silicon-based compounds such as organosilicone-polyether copolymers, such as polydimethylsiloxane-polyoxyalkylene block copolymers, e.g., polyether modified polydimethyl siloxane, and combinations thereof. Examples of surfactants include non-silicone based organic surfactants such as VORASURF^{™} 504, available from The Dow Chemical Company. Surfactants are available commercially and include those available under trade names such as NIAXT^{™}, such as NIAX^{™} L 6988; and TEGOSTAB^{™}, such as TEGOSTAB^{™} B 8462; among others.

Other surfactants that may be useful herein are polyethylene glycol ethers of long-chain alcohols, tertiary amine or alkanolamine salts of long-chain allyl acid sulfate esters, alkylsulfonic esters, alkyl arylsulfonic acids, and combinations thereof. Such surfactants are employed in amounts sufficient to stabilize the foaming reaction against collapse and the formation of large uneven cells. The amount of surfactant, when used, may be from 0.1 pts to 10.0 based upon 100 pts of a combination of the total polyols present in the isocyanate-reactive composition. All individual values and subranges from 0.1 pts to 10.0 pts are included; for example, the surfactant may be from a lower limit of 0.1 pts, 0.2 pts, or 0.3 pts to an upper limit of 10.0 pts, 9.0 pts, 7.5, or 6 pts of the isocyanate-reactive composition based upon 100 pts of a combination of the total polyols present in the isocyanate-reactive composition.

### Other Optional/ Auxiliary Additives

Other optional/ auxiliary compounds or additives that may be added to the isocyanate reactive composition and/or the foam-forming composition of the present invention for the production of polyurethane /polyisocyanurate foam may include, for example, other co-catalysts, co-surfactants, toughening agents, flow modifiers, adhesion promoters, diluents, stabilizers, plasticizers, catalyst de-activators, dispersing agents, flame retardant and mixtures thereof. In various embodiments, fire performance may be enhanced by including one or more flame retardants. Flame retardants may be brominated or non-brominated and may include, by way of example and not limitation, tris(1,3-dichloropropyl)phosphate, tris(2- choroethyl)phosphate, tris(2-chloropropyl)phosphate, diammonium phosphate, various halogenated aromatic compounds, antimony oxide, alumina trihydrate, and combinations thereof. When used, the flame retardant may be present in an amount from 0.1 pts to about 30 pts, or about 1 pts to 25 pts, or about 2 pts to about 25 pts, or about 5 pts to about 25 pts based on 100 pts of total polyols amount in the isocyanate-reactive component.

Other additives such as fillers and pigments may be included in the inventive rigid PIR/PUR foam compositions. Such fillers and pigments may include, in non-limiting embodiments, barium sulfate, calcium carbonate, graphite, carbon black, titanium dioxide, iron oxide, microspheres, alumina trihydrate, wollastonite, glass fibers, polyester fibers, other polymeric fibers, combinations thereof, and the like.

### Method of Foam Preparation

In various embodiments, the PIR/PUR foam is prepared by mixing all individual components, including at least one isocyanate-reactive compound, a T-shaped siloxane, catalyst, surfactant, blowing agents and any other additives with at least one isocyanate compound at room temperature or at an elevated temperature of 25 to 120°C (e.g., from 30 to 90°C or from 40 to 70°C) for a duration of 1- 20 seconds, followed by an immediate pouring, spraying, injection or lay down of the resulting mixture into a mold cavity or a substrate for foaming. In some embodiments, the isocyanate-reactive component and the T-shaped siloxane may be mixed prior to or upon addition to the isocyanate component. Similarly, optional auxiliary additives such as catalysts, flame retardants, blowing agent, and surfactants, etc., may be added to the isocyanate reactive composition prior to mixing with the isocyanate component or mixed with the isocyanate component online as separate streams.

Mixing may be performed in a spray apparatus, a mixing head, or a vessel. Immediately after mixing, the foaming mixture may be sprayed or otherwise deposited or injected or poured onto a substrate or into a mold. Irrespective of any particular method of foam fabrication, the amount of the foaming mixture introduced into the mold or onto the substrate is enough to fully fill the mold or take the shape of a panel or any other functional shapes as the foam expands and cures. Some degree of overpacking may even be introduced by using a slight excess amount of the reaction mixture beyond minimally required. For example, the cavity may be overpacked by 5 to 35%, i.e., 5 to 35% by weight more of the reaction system is introduced beyond that minimally required to fill the cavity once the reaction mixture expands. This cavity may be optionally kept at atmospheric pressure or partially evacuated to subatmospheric pressure.

Upon reacting, the foaming mixture takes the shape of the mold or adheres to the substrate to produce a PIR/PUR foam which is then allowed to cure, either partially or fully. Suitable conditions for promoting the curing of the PIR/PUR polymer include a temperature of from about 20° C to about 150° C. In some embodiments, the curing is performed at a temperature of from about 30° C to about 75° C. In other embodiments, the curing is performed at a temperature of from about 35° C to about 65° C. In various embodiments, the temperature for curing may be selected at least in part based on the time duration required for the PUR/PIR polymer to gel and/or cure at that particular temperature. Cure time will also depend on other factors, including, for example, the usage amount of particular components (e.g., type and amount of catalysts thereof), and the size and shape of the article being manufactured. Different articles being produced may include, but is not limited to, foam board for roofing, insulation panels for building and construction use, and door panels for appliances, etc.

### Foam Properties

The isocyanate-reactive composition of the present invention for making rigid polyurethane or polyisocyanurate foams provides a rigid foam product having a density of from 25 kg/m³ to 200 kg/m³ in one general embodiment. In exemplary embodiments, the density of the rigid polyurethane or polyisocyanurate foam may be from 25 kg/m³ to 150 kg/m³ in one embodiment, 25 kg/m³ to 100 kg/m³ in another embodiment, 25 kg/m³ to 75 kg/m³ in still another embodiment, 25 kg/m³ to 60 kg/m³ in yet another embodiment, and 30 kg/m³ to 60 kg/m³ in even still another embodiment.

The rigid polyurethane or polyisocyanurate foams of the present invention also exhibit several beneficial properties such as a low thermal conductivity (improved thermal insulation performance). For example, the foam of the present invention exhibits a low thermal conductivity of no more than 20.5 mW/m-K at 10 °C in one general embodiment, from 16.0 mW/m-K to 20.0 mW/m-K in another embodiment, from 16.5 mW/m-K to 20 mW/m-K in still another embodiment, and from 17.0 mW/m-K to 19.5 mW/m-K in yet another embodiment. The thermal insulation performance of rigid foam of the present invention, as measured by thermal conductivity (or "K-factor"), is defined and determined by the procedure described in ASTM C518-04 (2010).

In addition, the foam of the present invention advantageously exhibits a good mechanical properties, as measured in terms of compressive strength as determined by the procedure described in ASTM D-1621. For example, in a general embodiment the foam exhibits a compressive strength value of no lower than 100 KPa. Foams with the compressive strength lower than 100 KPa are generally considered to lack sufficient mechanical strength for long term use.

The description hereinabove is intended to be general and is not intended to be inclusive of all possible embodiments. Similarly, the examples herein below are provided to be illustrative only and are not intended to define or limit the claimed subject matter in any way. Those skilled in the art will be fully aware that other embodiments, within the scope of the claims, will be apparent from consideration of the specification and/or practice of the method as disclosed herein. Such other embodiments may include selections of specific components and constituents and proportions thereof; mixing and reaction conditions, vessels, deployment apparatuses, and protocols; performance and selectivity; identification of products and by-products; subsequent processing and use thereof; and the like; and that those skilled in the art will recognize that such may be varied within the scope of the claims appended hereto.

### EXAMPLES

### Materials

Two aromatic polyester polyols were used in the Examples. They are prepared with the use of aromatic dicarboxylic acid and polyglycols such as DEG, PEG200, glycerol, etc. Polyol A has an OH number of 220 mg KOH/g, number average molecular weight of 510 g/mole, and OH functionality of 2.0. Polyol B has an OH number of 315, number average molecular weight of 427, and OH functionality of 2.4.

Various foaming additives such as catalysts, surfactants, flame retardant (FR) additives, and physical blowing agents, etc. were used for the Examples. For instance, Dabco K-2097 (Catalyst A) is a trimer catalyst, available from Evonik, Polycat 5 (Catalyst B) is a blowing catalyst for polyurethane foaming, available from Evonik. Surfactant A is a silicone polyether surfactant, available from Evonik, and TEP (FR Additive) is triethyl phosphate flame retardant, available from ICL-IP. Three T-shaped liquid siloxane materials used in the Examples are listed in the Table 1 below.

**Table 1. Liquid Siloxane Materials Used**

| **Liquid Siloxane Additive** | **Product Name** | **R1** | **R2** | **R3** | **R4** | **p1** | **p2** | **p3** | **p2+p3** | **Supplier** |
|---|---|---|---|---|---|---|---|---|---|---|
| Siloxane Additive A | L-77 | H | CH₃ | H | CH₃ | 3 | 5-11 | 2-6 | 7-17 | Momentive |
| Siloxane Additive B | XIAMETER^{™} OFX-5211 | H | n/a | - (C=O)CH₃ | CH₃ | 3 | 7 | 0 | 7 | Dow, Inc. |
| Siloxane Additive C | XIAMETER^{™} OFX-0309 | H | n/a | H | CH₃ | 3 | 7 | 0 | 7 | Dow, Inc. |

| | | | | | | | | | | |
|---|---|---|---|---|---|---|---|---|---|---|
| Siloxane Additive A and Siloxane Additive C are not according to the invention. | | | | | | | | | | |

The polyisocyanate used throughout the examples is commercially manufactured by Dow, Inc.: PAPI^{™} 580N (or Voranate^{™} M 600). PAPI^{™} 580N is a Polymeric MDI with a NCO% of 30.8, an average functionality of 3.0 and a viscosity at 25 °C of about 600 mPa.

The physical blowing agent used for the example(s) and comparative example(s) may be cyclopentane, a 70/30 blend of cyclopentane and isopentane or sometimes referred as c/i-pentane blend (70/30), etc.

### General Protocol for Foam Preparation

The polyols, a T-shaped siloxane material (if required), surfactant, flame retardant, catalyst and water were added into a plastic cup and the plastic cup with its contents was weighed. The cup contents were then mixed with a high-speed overhead mixer to provide a "polyol package" (i.e., B-Side). A targeted amount of blowing agent was then added into the cup and thoroughly mixed with the polyol package. Subsequently to this, a desired amount of a polyisocyanate component (i.e., A-side) was added into the formulation mixture in the cup. The resulting complete formulation was then immediately mixed with a high-speed overhead mixer at 3,000 rpm for 5 seconds (s) and then (the mixed formulation) was poured into a vertical plate mold which was preheated to 55 °C. The size of the mold was 30 cm (Height) × 20 cm (Length) × 5 cm (Width). This mold was placed vertically along its "Height" direction for foaming. The foam was removed from the mold after approximately 20 min curing inside of the mold and then placed on a lab bench overnight before conducting physical properties testing.

### Characterization and Properties Measurement

Cream time and gel time are determined according to the testing procedure described in ASTM D7487 (2013). The general procedure for the cream time and gel time measurements includes the following: a free rise foam is made by the plastic cup method described in the above. Using this method, polyols, surfactant, flame retardants, catalysts, and water are weighed into a plastic cup. A high-speed mixer is used to mix the polyol components. A proper amount of blowing agent is then and added into the cup and thoroughly mixed into the polyol side components. Isocyanate components are then added into the cup followed by immediate mixing using an overhead mixer at about 3,000 rpm for 5 seconds. The recording of time begins when the mechanical mixing of isocyanate and the polyol side mixture begins. When the foam formulation in the cup shows a distinct color or appearance change due to the formation of large number of bubbles (more commonly known as creaming), the time is recorded as "Cream Time". The tip of a wooden tongue depressor is then dipped into the foam formulation and quickly pulled out to check whether the foaming mixture becomes stringy. The time when the foaming formulation becomes stringy based on the wood tongue depressor testing is recorded as "Gel Time".

Within 24 hours after the foams were made (after an overnight sit on a lab bench, desk, etc.), foam specimens at a size of 20 cm × 20 cm × 2.5 cm were cut from the middle interior section of the molded foams for thermal conductivity measurements. The thermal conductivity (K-factor or Lambda value) of each of the foam specimens was measured at 50°F according to the procedure described in ASTM C518-04 (2010). The accuracy of K-factor measurements is typically within 0.1 mW/m*K. The average of K-factor measurements over at least two testing specimens was reported.

The density of rigid foam was measured according to the procedure described in ASTM 1622-03 (2008). Samples of the rigid foam were cut into cube specimens having a size of 5 cm × 5 cm × 5 cm. These samples were weighed, and the exact dimension of each sample was measured. Then, the density of the samples was calculated.

The open cell content of formed rigid PU foams were measured in accordance with ASTM D-6226. A pycnometers AccuPyc 1330 from Micromeretics (Norcross, GA) equipped with the FoamPyc option for calculation of open cell content was used for this measurement. Five specimens having nominal dimensions of 1"x 1"x1" were taken from various points through the foam sample and measured. Any specimens with obvious defects by visual inspection were eliminated for testing. Prior to the measurement, all specimens were conditioned for a minimum for 24 hours at ASTM standard laboratory conditions. The average value of open cell content was then reported.

Compressive strength of the foam samples was measured by the mechanical resistance of the foams to compression stress. This test was conducted in the direction perpendicular to the foam rise direction. At least four specimens were used for the measurement of compressive strength. Each specimen at approximate size of 2 in × 2 in × 1 in (5 cm × 5 cm × 2.5 cm) was taken from the middle interior section of the molded foams and measured according to ASTM D-1621 method.

### Comparative Example A and Examples 1-3

Comparative Example A: 180 grams of foaming mixture were prepared in accordance with the formulation recipe shown in Table 2 and the general procedure described above and immediately poured into a vertically standing mold of 5 cm × 20 cm × 30 cm. For this formulation, about 135 grams of foaming mixture were poured inside of the mold. The foam was removed from the mold after 20 min and placed on a lab bench overnight prior to conducting physical properties testing on the resulting foam product. Foam properties characterization results are summarized in Table 2.

Example 1: add 1.62 parts Liquid Silicone Additive A into a blend of Polyol A and Polyol B at 61 pts and 20.2 pts respectively, followed by a thorough mixing. The polyol mixture formed is clear and non-hazy. This T-shaped siloxane containing polyol mixture is stable at room temperature for an extended period of time (> 2 weeks) without becoming hazy or phase separated. This mixture was used for preparing foam formulations by following the detailed formulation described in Table 2 and using the same (or similar) protocol as Comparative Example A. The foam properties for this example are also shown in Table 2.

Examples 2 - 3: replicate the protocol of Example 1, with the exception that the T-shaped liquid siloxane additive B and liquid siloxane additive C were used for Examples 2 and 3, respectively. Similar to Example 1, the polyol mixture containing either liquid siloxane additive B or liquid siloxane additive C is also visually clear with no hazy appearance, suggesting the mixture is fully miscible. Both solutions are also stable at room temperature for an extended period of time (> 2 weeks) without becoming hazy or phase separated. Foam properties for these examples are reported in Table 2 as well.

**Table 2. Formulation Set for Incorporating Liquid Siloxane Additives in a PIR System**

| | **Comp Ex A** | **Ex 1** | **Ex 2** | **Ex 3** |
|---|---|---|---|---|
| **Raw Materials** | Parts | Parts | Parts | Parts |
| Polyol A | 61 | 61 | 61 | 61 |
| Polyol B | 20.2 | 20.2 | 20.2 | 20.2 |
| Catalyst A | 1.8 | 1.8 | 1.8 | 1.8 |
| Catalyst B | 0.95 | 0.95 | 0.95 | 0.95 |
| Surfactant A | 3 | 3 | 3 | 3 |
| FR Additive | 15 | 15 | 15 | 15 |
| Liquid Siloxane Additive A | | 1.62 | | |
| Liquid Siloxane Additive B | | | 1.62 | |
| Liquid Siloxane Additive C | | | | 1.62 |
| Cyclo/Iso-Pentane (70/30) | 17 | 17 | 17 | 17 |
| Water | 0.8 | 0.8 | 0.8 | 0.8 |
| Total amount of B-side | 119.75 | 121.37 | 121.37 | 121.37 |
| Polyisocyanate A (PAPI^{™} 580N) | 250 | 250 | 250 | 250 |

| **Property Results** | | | | |
|---|---|---|---|---|
| Cream Time (sec) | 11 | 12 | 11 | 12 |
| Gel Time (sec) | 33 | 33 | 35 | 32 |
| Foam Density (kg/m3) | 42.7 | 43.2 | 43.2 | 43.4 |
| K-factor at 10°C (mW/m-K) | 21.0 | 19.99 | 19.76 | 19.94 |
| K-factor Improvement (mW/m-K) | - | 1.01 | 1.24 | 1.06 |
| Open cell content (%) | 8.8% | 7.7% | 7.6% | 8.0% |
| Compressive strength (KPa) | 131 | 130 | 114 | 136 |

| | | | | |
|---|---|---|---|---|
| Examples 1 and 3 are not according to the invention. | | | | |

The results shown in Table 2 demonstrate that the thermal conductivity or K-factor measured for the foams made from all three liquid siloxane additives with T-shaped structure are significantly lower than that of the comparative example. Additionally, the K-factor improvement provided by the use of T-shaped siloxane materials of the present invention does not compromise other foam properties such as density, open cell content, and compressive strength.

### Comparative Examples B-C and Examples 4-6

Comparative Examples B - C and Examples 4 - 6: replicate the protocol used in Comp Ex. A and Ex 1 and follow the detailed formulations shown in Table 3 for foam preparation. For this set of Comparative Examples and Examples, varying amounts of liquid siloxane additive B were used (0, 0.5, 1, 2 and 5 pts per 100 pts of polyols). The resultant foam properties are shown in Table 3.

**Table 3. Formulation Set Containing Liquid Silicone Additive at Varying Amounts**

| | **Comp Ex B** | **Ex 4** | **Ex 5** | **Ex 6** | **CompEx C** |
|---|---|---|---|---|---|
| **Raw Materials** | Parts | Parts | Parts | Parts | Parts |
| Polyol A | 75 | 75 | 75 | 75 | 75 |
| Polyol B | 25 | 25 | 25 | 25 | 25 |
| Catalyst A | 2.24 | 2.24 | 2.24 | 2.24 | 2.24 |
| Catalyst B | 1.18 | 1.18 | 1.18 | 1.18 | 1.18 |
| Surfactant A | 3.53 | 3.53 | 3.53 | 3.53 | 3.53 |
| FR Additive | 17.65 | 17.65 | 17.65 | 17.65 | 17.65 |
| Liquid Siloxane Additive B | 0 | 0.5 | 1 | 2 | 5 |
| Cyclopentane | 24.71 | 24.71 | 24.71 | 24.71 | 24.71 |
| Water | 0.94 | 0.94 | 0.94 | 0.94 | 0.94 |
| Total amount of B-side | 150.25 | 150.75 | 151.25 | 152.25 | 155.25 |
| Polyisocyanate A (PAPI^{™} 580N) | 308.9 | 308.9 | 308.9 | 308.9 | 308.9 |

| **Property Results** | | | | | |
|---|---|---|---|---|---|
| Cream Time (sec) | 12 | 11 | 11 | 12 | 12 |
| Gel Time (sec) | 32 | 32 | 31 | 33 | 35 |
| Foam Density (kg/m3) | 43.1 | 42.7 | 41.6 | 42 | 42.3 |
| K-factor at 10°C (mW/m-K) | 19.8 | 19.4 | 19.2 | 19.1 | 19.6 |
| K-factor Improvement (mW/m-K) | - | 0.4 | 0.6 | 0.7 | 0.2 |
| Open cell content (%) | 2.6% | 3.3% | 3.1% | 3.5% | 3.9% |
| Compressive strength (KPa) | 127.5 | 131 | 138.1 | 123 | 95.2 |

Results in Table 3 show that thermal conductivity or K-factor of foams prepared from the inventive foam-forming compositions of Ex 4-6 are advantageous over Comparative Example B (which does not contain a T -shaped siloxane material). In Comparative Example C, the foam's mechanical property is slightly negatively affected by the relatively high usage amount of the T-shaped liquid siloxane material.

## Claims

1. An isocyanate-reactive composition comprising:
at least one isocyanate-reactive compound; and
at least one T-shaped siloxane material of the following structure: 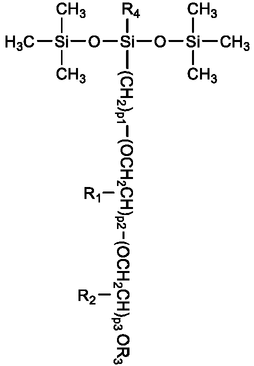
wherein, R₁ and R₂ are each independently a hydrogen or a C1-C4 alkyl group, p1 is an integer value of 1 - 6, p2 is an integer value of 1 - 12, p3 is an integer value of 0 - 12, the values of p1 and p2 combined being greater than or equal to 2; R₃ being a C1-C4 alkyl group, an acetyl, a propionyl, or butyrate; and R₄ being a C1-C4 alkyl, or trimethylsiloxy group.

2. The isocyanate-reactive composition of claim 1, further defined in that R₃ is an acetyl, a propionyl, or butyrate.

3. The isocyanate-reactive composition of claim 1, further defined in that R₃ is acetyl.

4. The isocyanate-reactive composition of claims 1-3, wherein the at least one of the T-shaped siloxane material has molecular weight from 350 g/mol to 2,500 g/mol.

5. The isocyanate-reactive composition of claims 1 - 4, wherein the amount of the at least one T-shaped siloxane material is 0.1 - 5 parts by weight, per 100 parts by weight of the at least one isocyanate-reactive compound.

6. The isocyanate-reactive composition of claims 1 - 5, further including at least one auxiliary additive, the auxiliary additive being a surfactant, a catalyst, a physical blowing agent, a chemical blowing agent, a flame-retardant additive, or a nucleating agent, or a mixture thereof.

7. A foam-forming composition comprising the isocyanate-reactive composition of claims 1 - 6 and at least one polyisocyanate compound.

8. A method for preparing a polyurethane or polyisocyanurate foam with the foam-forming composition of claim 7, wherein the isocyanate-reactive composition is mixed with the at least one polyisocyanate compound, wherein the at least one polyisocyanate compound has an isocyanate index from 100 to 600.

9. A polyurethane/polyisocyanurate foam prepared from the isocyanate-reactive composition of claims 1 - 6 and at least one polyisocyanate compound, wherein thermal conductivity of the prepared foam measured according to the ASTM C518-04 (2010) procedure is less than or equal to 20.5 mW/m-K.

10. The polyurethane/polyisocyanurate foam of claim 9, wherein a polyurethane or polyisocyanurate foam prepared has an open cell content lower than 8% measured in accordance with ASTM D-6226 and a density between 25-200 kg/m³ measured according to the procedure described in ASTM 1622-03 (2008).

## Patentansprüche

1. Isocyanat-reaktive Zusammensetzung, umfassend:
mindestens eine isocyanat-reaktive Verbindung; und
mindestens ein T-förmiges Siloxanmaterial mit folgender Struktur: 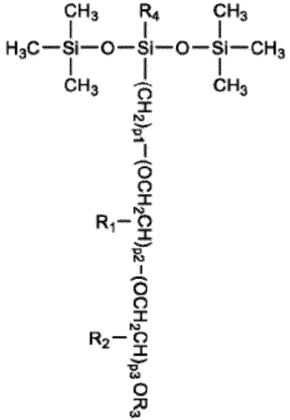
worin R₁ und R₂ jeweils unabhängig voneinander eine Wasserstoff- oder eine C1-C4-Alkylgruppe sind, p1 ein ganzzahliger Wert von 1 - 6 ist, p2 ein ganzzahliger Wert von 1 - 12 ist, p3 ein ganzzahliger Wert von 0 - 12 ist, wobei die Werte von p1 und p2 zusammen größer oder gleich 2 sind; R₃ eine C1-C4-Alkylgruppe, ein Acetyl, ein Propionyl oder ein Butyrat sind; und R₄ eine C1-C4-Alkyl- oder Trimethylsiloxygruppe ist.

2. Isocyanat-reaktive Zusammensetzung nach Anspruch 1, ferner dadurch definiert, dass R₃ ein Acetyl, ein Propionyl oder ein Butyrat ist.

3. Isocyanat-reaktive Zusammensetzung nach Anspruch 1, ferner dadurch definiert, dass R₃ Acetyl ist.

4. Isocyanat-reaktive Zusammensetzung nach den Ansprüchen 1 bis 3, wobei das mindestens eine der T-förmigen Siloxanmaterialien ein Molekulargewicht von 350 g/mol bis 2.500 g/mol aufweist.

5. Isocyanat-reaktive Zusammensetzung nach den Ansprüchen 1 bis 4, wobei die Menge des mindestens einen T-förmigen Siloxanmaterials 0,1 bis 5 Gewichtsteile pro 100 Gewichtsteile der mindestens einen isocyanat-reaktiven Verbindung beträgt.

6. Isocyanat-reaktive Zusammensetzung nach den Ansprüchen 1 bis 5, die ferner mindestens einen Hilfszusatzstoff einschließt, wobei der Hilfszusatzstoff ein Tensid, ein Katalysator, ein physikalisches Treibmittel, ein chemisches Treibmittel, ein flammhemmender Zusatzstoff oder ein Keimbildner oder eine Mischung davon ist.

7. Schaumstoffbildende Zusammensetzung, umfassend die isocyanat-reaktive Zusammensetzung nach einem der Ansprüche 1 bis 6 und mindestens eine Polyisocyanatverbindung.

8. Verfahren zum Herstellen eines Polyurethan- oder Polyisocyanuratschaumstoffs mit der schaumstoffbildenden Zusammensetzung nach Anspruch 7, wobei die isocyanat-reaktive Zusammensetzung mit der mindestens einen Polyisocyanatverbindung gemischt wird, wobei die mindestens eine Polyisocyanatverbindung einen Isocyanatindex von 100 bis 600 aufweist.

9. Polyurethan-/Polyisocyanuratschaumstoff, hergestellt aus der isocyanat-reaktiven Zusammensetzung nach den Ansprüchen 1 bis 6 und mindestens einer Polyisocyanatverbindung, wobei die Wärmeleitfähigkeit des hergestellten Schaumstoffs, gemessen nach dem Verfahren ASTM C518-04 (2010), weniger als oder gleich 20,5 mW/m-K beträgt.

10. Polyurethan-/Polyisocyanuratschaumstoff nach Anspruch 9, wobei ein hergestellter Polyurethan- oder Polyisocyanuratschaumstoff einen gemäß ASTM D-6226 gemessenen Offenzellgehalt von weniger als 8 % und eine gemäß dem in ASTM 1622-03 (2008) beschriebenen Verfahren gemessene Dichte zwischen 25-200 kg/m³ aufweist.

## Revendications

1. Composition réactive aux isocyanates comprenant :
au moins un composé réactif aux isocyanates ; et
au moins un matériau siloxane en forme de T de la structure suivante : 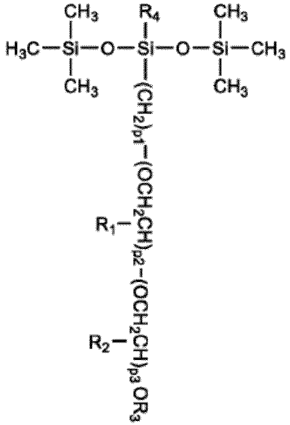
dans laquelle R₁ et R₂ sont chacun indépendamment un hydrogène ou un groupe alkyle en C1-C4, p1 est une valeur entière comprise entre 1 et 6, p2 est une valeur entière comprise entre 1 et 12, p3 est une valeur entière comprise entre 0 et 12, les valeurs de p1 et p2 combinées étant supérieures ou égales à 2 ; R₃ étant un groupe alkyle en C1-C4, un acétyle, un propionyle, ou un butyrate ; et R₄ étant un groupe alkyle en C1-C4, ou triméthylsiloxy.

2. Composition réactive aux isocyanates selon la revendication 1, définie en outre par le fait que R₃ est un acétyle, un propionyle, ou un butyrate.

3. Composition réactive aux isocyanates selon la revendication 1, définie en outre par le fait que R₃ est acétyle.

4. Composition réactive aux isocyanates selon les revendications 1 à 3, dans laquelle l'au moins un matériau siloxane en forme de T a une masse moléculaire allant de 350 g/mol à 2 500 g/mol.

5. Composition réactive aux isocyanates selon les revendications 1 à 4, dans laquelle la quantité de l'au moins un matériau siloxane en forme de T est de 0,1 à 5 parties en poids, pour 100 parties en poids de l'au moins un composé réactif aux isocyanates.

6. Composition réactive aux isocyanates selon les revendications 1 à 5, comportant en outre au moins un additif auxiliaire, l'additif auxiliaire étant un agent tensioactif, un catalyseur, un agent d'expansion physique, un agent d'expansion chimique, un additif retardateur de flamme, ou un agent de nucléation, ou un mélange de ceux-ci.

7. Composition de formation de mousse comprenant la composition réactive aux isocyanates selon les revendications 1 à 6 et au moins un composé polyisocyanate.

8. Procédé de préparation d'une mousse de polyuréthane ou de polyisocyanurate avec la composition de formation de mousse selon la revendication 7, dans lequel la composition réactive aux isocyanates est mélangée avec l'au moins un composé polyisocyanate, dans lequel l'au moins un composé polyisocyanate a un indice d'isocyanate allant de 100 à 600.

9. Mousse de polyuréthane/polyisocyanurate préparée à partir de la composition réactive aux isocyanates selon les revendications 1 à 6 et d'au moins un composé polyisocyanate, dans laquelle la conductivité thermique de la mousse préparée, mesurée selon la procédure de la norme ASTM C518-04 (2010), est inférieure ou égale à 20,5 mW/m-K.

10. Mousse de polyuréthane/polyisocyanurate selon la revendication 9, dans laquelle une mousse de polyuréthane ou de polyisocyanurate préparée a une teneur en cellules ouvertes inférieure à 8 % , mesurée conformément à la norme ASTM D-6226, et une masse volumique comprise entre 25 et 200 kg/m³, mesurée selon la procédure décrite dans la norme ASTM 1622-03 (2008).
